Europäisches Patentamt

European Patent Office

Office européen des brevets

(11) Numéro de publication: **0 585 634 A1**

# DEMANDE DE BREVET EUROPEEN

(21) Numéro de dépôt: 93112401.0

(22) Date de dépôt: **03.08.93**

(51) Int. Cl.⁵: **H04B 3/02**, H04M 1/00, H04M 1/26

(30) Priorité: **11.08.92 FR 9209985**

(43) Date de publication de la demande:
**09.03.94 Bulletin 94/10**

(84) Etats contractants désignés:
**AT BE DE DK ES GB GR IE IT LU NL SE**

(71) Demandeur: **SWATCH AG**
**Jakob Stämpflistrasse 94**
**CH-2500 Biel(CH)**

(72) Inventeur: **Schlesinger, Benjamin**
**Gerberweg 20**
**CH-2560 Nidau(CH)**

(74) Mandataire: **de Montmollin, Henri et al**
**ICB**
**Ingénieurs Conseils en Brevets SA**
**Passage Max Meuron 6**
**CH-2001 Neuchâtel (CH)**

(54) **Circuit d'interface entre un appareil de télécommunications et une ligne téléphonique.**

(57) Ce circuit d'interface destiné à être utilisé en combinaison avec un dispositif de télécommunication (8) pour émettre et recevoir un signal de communication via une ligne téléphonique (9) comportant un fil et un fil négatif (9a, 9b), comporte des moyens (16) d'ajustement des caractéristiques en courant continu pour ajuster la relation entre un courant continu I sur la ligne téléphonique (9) et une tension continue correspondante V entre les fils respectivement positif et négatif (9a, 9b), ce circuit étant caractérisé en ce que les moyens d'ajustement (16) comportent des premiers moyens de réglage (20, 21) reliés entre les fils positif et négatif (9a, 9b) pour régler une première partie du courant continu I à une valeur $I_1$ proportionnelle à une valeur $V-V_x$ quand la tension continue V est supérieure à $V_x$, où $V_x$ est une valeur prédéterminée de la tension continue V, et à une valeur sensiblement égale à zéro quand ladite tension continue V est inférieure à $V_x$.

Fig. 3

La présente invention se rapporte à un circuit d'interface, et plus particulièrement à un circuit d'interface destiné à être utilisé en combinaison avec un dispositif de télécommunication qui reçoit et émet des signaux de message, via une ligne téléphonique. Le circuit d'interface de la présente invention est particulièrement approprié pour une utilisation en combinaison avec un dispositif téléphonique ou téléphone comportant un combiné standard qui comprend un microphone et un écouteur, et qui est connecté à une ligne téléphonique. La présente invention sera décrite ci-après dans le cadre d'une telle application donnée ici à titre d'exemple. On comprendra cependant que l'invention n'est pas limitée à cette application et qu'elle peut être utilisée en combinaison avec d'autres dispositifs de télécommunication.

Les systèmes téléphoniques classiques comportent un certain nombre de téléphones chacun connecté par une ligne téléphonique à un central. Chaque téléphone ou dispositif téléphonique comporte un combiné comprenant un microphone et un écouteur qui sont connectés à la ligne téléphonique associée à ce dispositif téléphonique, via un circuit d'interface. Quand l'utilisateur du dispositif téléphonique parle dans le microphone, le signal de message est envoyé au circuit d'interface où il est modulé, et le signal de communication résultant est transmis, via la ligne téléphonique, au central.

De façon équivalente, quand un utilisateur d'un dispositif téléphonique répond à un appel en décrochant le combiné, le circuit d'interface associé à ce dispositif téléphonique traite le signal de communication présent sur la ligne téléphonique auquel le dispositif téléphonique est relié. Le signal, qui a été émis depuis un autre dispositif téléphonique est ainsi démodulé et le signal de message est envoyé à l'écouteur du combiné de sorte que l'utilisateur du dispositif peut entendre le message transmis.

Tout signal de communication ainsi émis et les dispositifs téléphoniques utilisés pour émettre et recevoir ces signaux doivent répondre à certaines normes de communication dans chaque pays où s'effectue l'utilisation. Premièrement, la résistance du dispositif téléphonique à cause du courant continu présent sur la ligne téléphonique, doit satisfaire certaines caractéristiques. Plus particulièrement, le rapport entre l'intensité du courant continu sur la ligne, et la valeur de la tension continue correspondante entre les fils de cette même ligne, doit suivre une relation donnée.

En d'autres termes, la composante continue d'un signal de communication sur une ligne téléphonique doit satisfaire certaines caractéristiques en courant continu, telles que le rapport entre la valeur de la composante continue du courant sur la ligne, et la valeur de la composante continue de la tension entre les fils de cette même ligne suive une relation donnée.

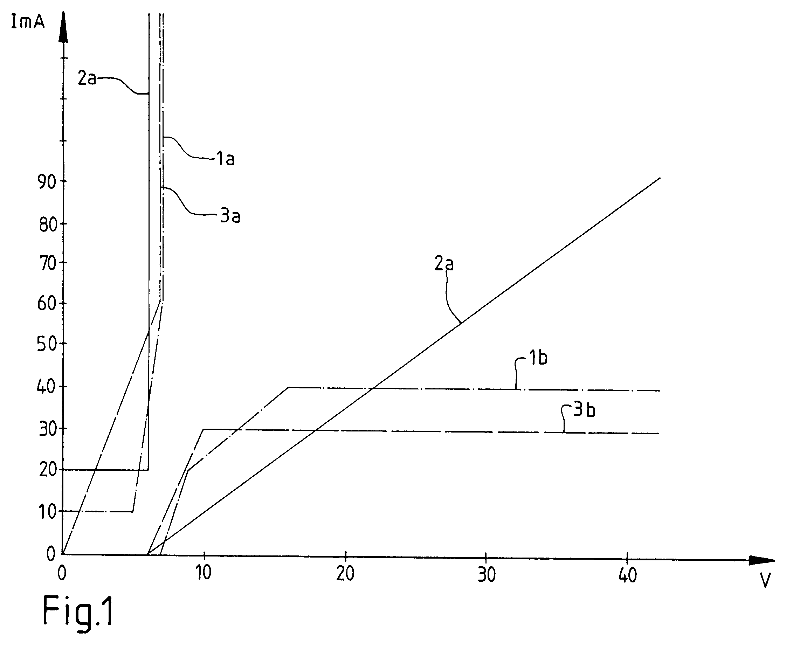

La figure 1 en fournit une représentation pour quelques pays donnés ici à titre d'exemple et montre une représentation graphique de la caractéristique en courant continu, imposée en Suisse (courbes 1a et 1b) en Allemagne (courbes 2a et 2b) et au Canada (courbes 3a et 3b). Le diagramme représenté sur la figure 1 est ue représentation de la composante continue du courant, en milliampères, d'un signal de communication sur la ligne téléphonique en fonction de la composante continue de la tension, en volts, de ce signal de communication. Les régions entre les courbes 1a, 2a et 3a et l'axe vertical, et entre les courbes 1b, 2b et 3b et l'axe horizontal, représentent les valeurs interdites de la composante continue du courant en fonction de la tension d'un signal de communication sur le réseau téléphonique, dans ces pays.

Deuxièmement, l'impédance de sortie en courant alternatif du dispositif téléphonique doit avoir une certaine valeur, en fonction du pays dans lequel il est utilisé. Dans certains pays, cette impédance doit être réelle, tandis que dans d'autres pays on exige une impédance complexe.

Comme on peut le voir sur la figure 1, les normes de communication imposées varient dans certains pays. Les systèmes téléphoniques classiques sont conçus pour satisfaire uniquement un jeu de normes et ne peuvent être utilisés que dans un seul pays. Si on souhaite vendre des systèmes téléphoniques existant dans des pays ayant des normes de communication autres que celles pour lesquelles le dispositif téléphonique a été conçu, les éléments de circuit du dispositif téléphonique doivent être analysés, reconçus et modifiés.

Une telle redéfinition est longue, coûteuse et peut être réalisée uniquement par des personnes compétentes dans la conception des circuits électroniques. De plus, les éléments de circuit électronique internes ne sont pas accessibles facilement à l'utilisateur de ces dispositifs. Afin de modifier ces éléments de circuit électronique internes, des outils spéciaux et une expérience sont nécessaires. De telles modifications peuvent généralement être réalisées uniquement par un spécialiste. Les dépenses et les inconvénients de telles opérations ont ainsi faits que les dispositifs téléphoniques de l'art antérieur n'ont pas pu être utilisés facilement dans des pays ayant des normes différentes.

La présente invention a donc pour but de fournir un circuit d'interface destiné à être utilisé en combinaison avec un dispositif de télécommunication, qui permette de surmonter ou de palier les inconvénients de l'art antérieur.

Un autre but de la présente invention est de fournir un circuit d'interface de conception simple, et destiné à être utilisé dans un dispositif de télécommunication, qui satisfasse au moins partiellement les normes de communication dans différents pays et qui puisse être facilement adapté pour satisfaire au moins partiellement d'autres normes de communication.

Ainsi, la présente invention a pour objet un circuit d'interface destiné à être utilisé en combinaison avec un dispositif de télécommunication, pour émettre et recevoir un signal de communication via une ligne téléphonique ayant un fil positif et un fil négatif, ce circuit comprenant en outre des moyens d'ajustement des caractéristiques en courant continu pour ajuster la relation entre un courant continu I sur ladite ligne et une tension continue correspondante V entre lesdits fils ou pôles positif et négatif, ce circuit étant caractérisé en ce que les moyens d'ajustement des caractéristiques en courant continu comportent des premiers moyens de réglage reliés entre lesdits fils positif et négatif pour régler une première partie dudit courant continu I à une valeur $I_1$ proportionnel à $V-V_x$ quand ladite tension continue V est supérieur à $V_x$, où $V_x$ est une valeur prédéterminée de ladite tension continue V, et à une valeur sensiblement égale à zéro quand ladite tension continu V est inférieure à $V_x$.

Les rapports interdits du courant I sur la tension V, comme représenté sur la figure 1, peuvent ainsi être évités, si bien qu'un dispositif de télécommunication comportant un circuit d'interface selon la présente invention est pourvu d'une caractéristique en courant continu appropriée à une utilisation de ce dispositif de télécommunication dans des pays comportant des normes de caractéristiques en courant continu différentes.

Selon un premier mode de réalisation de l'invention, un transistor de commutation et un élément de résistance $R_{dc}$ sont connectés en série entre les fils positif et négatif, et la première partie du courant I est amenée ainsi à circuler dans la résistance $R_{dc}$ quand la tension continue V est supérieure à $V_x$, de sorte que la relation entre la première partie du courant continu I et la différence de tension continue $V-V_x$ est déterminée effectivement par la valeur de l'élément de résistance $R_{dc}$. On peut ainsi choisir une valeur de $R_{dc}$ pour fournir au dispositif de télécommunication une caractéristique en courant continu appropriée à l'utilisation dans un certain nombre de pays ayant des normes de caractéristiques en courant continu différentes. De plus, la caractéristique en courant continu peut facilement être adaptée pour satisfaire les exigences d'autres pays en changeant la valeur effective de l'élément de résistance $R_{dc}$, par exemple en le remplaçant par un nouvel élément de résistance ou en reliant d'autres éléments de résistance, en série ou en parallèle, à l'élément $R_{dc}$.

Selon un autre mode de réalisation de l'invention, les moyens d'ajustement des caractéristiques en courant continu comportent de plus une source de courant constant continu connectée entre les fils positif et négatif de la ligne téléphonique pour régler une seconde partie du courant continu I à une valeur constante, en fournissant ainsi un autre moyen par l'intermédiaire duquel la relation entre le courant continu I et la tension continue V peut être modifiée pour satisfaire les caractéristiques en courant continu d'un certain nombre de pays.

Selon un autre mode de réalisation de l'invention, les moyens de réglage comportent de plus une branche de circuit connectée entre les fils positif et négatif de la ligne téléphonique pour régler la valeur de la tension continue $V_x$. Cette branche de circuit peut de façon avantageuse comporter un autre élément d'impédance $Z_{tel}$ qui fournit l'impédance de sortie alternative du dispositif de télécommunication. L'impédance de sortie alternative requise peut être obtenue alors simplement en changeant ou en modifiant de façon effective la valeur de cet élément d'impédance $Z_{tel}$.

Mais d'autres caractéristiques et avantages de l'invention apparaîtront clairement à la lecture de la description détaillée qui suit, prise en référence aux dessins annexés. donnés ici à titre d'exemple, et dans lesquels :

- la figure 1 est un diagramme représentant les caractéristiques en courant continu des dispositifs de télécommunication, imposées dans certains pays donnés à titre d'exemple,
- la figure 2 est un diagramme représentant les caractéristiques de fonction de transfert requises dans les dispositifs de télécommunication dans certains pays, à titre d'exemple,
- la figure 3 est un schéma bloc d'un mode de réalisation d'un circuit d'interface selon la présente invention,
- la figure 4 est un schéma de circuit d'un mode de réalisation des moyens d'ajustement des caractéristiques en courant continu du circuit d'interface de la figure 3,
- la figure 5 est une représentation graphique de la caractéristique en courant continu des moyens d'ajustement de la figure 4,
- la figure 6 est un schéma du circuit d'un mode de réalisation des circuits amplificateur d'émission du circuit d'interface de la figure 3,
- la figure 7 est une représentation graphique de la fonction de transfert des circuits amplificateur d'émission, de la figure 6, et
- la figure 8 est un schéma de circuit d'un mode de réalisation du circuit d'interface de la figure 3.

Comme il a été expliqué ci-avant, la figure 1 est une représentation graphique de la caractéristique en courant continu d'un dispositif téléphonique, imposée dans des pays tels que la Suisse, l'Allemagne et le Canada, où les régions entre les courbes 1a, 2a et 3a et l'axe vertical et entre les courbes 1b, 2b et 3b et l'axe horizontal représentent des valeurs interdites pour un courant continu I en fonction d'une tension continue V, dans ces pays.

Les normes de communication relatives aux dispositifs téléphoniques doivent satisfaire de même certaines normes acoustiques. Par exemple, la fonction de transfert d'un dispositif téléphonique en ce qui concerne les signaux émis par ce dispositif téléphonique, doit être telle qu'elle émette uniquement des signaux à l'intérieur d'une bande de fréquence autorisée, et qu'elle amplifie ces signaux selon une gamme de valeurs autorisées.

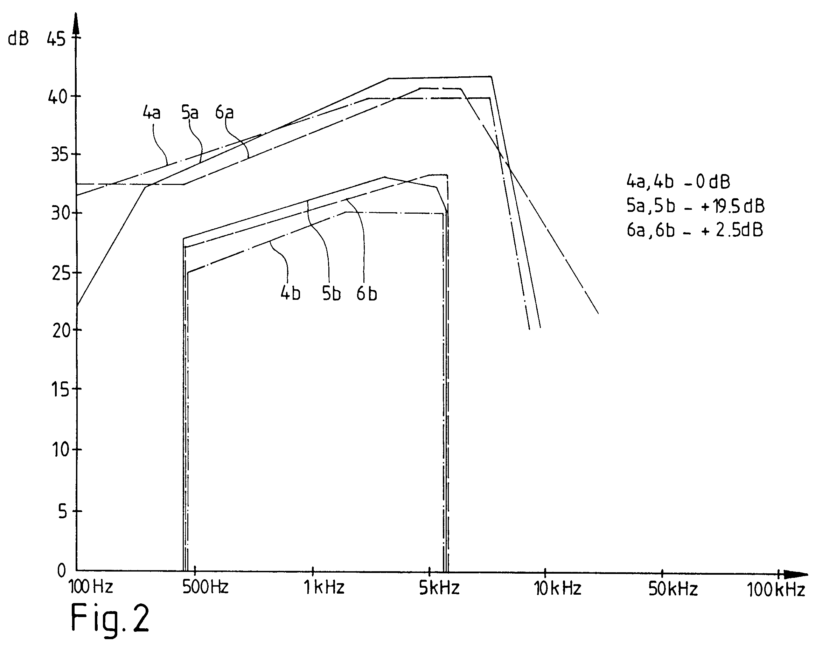

La figure 2 représente les caractéristiques de fonction de transfert imposées dans certains pays tels que la Suisse (courbe 4a et 4b), l'Allemagne (courbe 5a et 5b) et la Suède (courbe 6a et 6b).

La représentation sur la figure 2 est une courbe du rapport, en décibels, entre la tension de sortie du dispositif téléphonique et sa tension d'entrée, en fonction de la fréquence du signal de communication émis par ce dispositif. Des exigences similaires doivent de même être satisfaites par les dispositifs téléphoniques en ce qui concerne les signaux reçus depuis la ligne téléphonique. On remarquera que les valeurs réelles relevées sur la figure 2 pour l'Allemagne et la Suède ont été respectivement augmentées de +19,5 dB et de +2,5 dB. Les régions au-dessus des courbes 4a, 5a et 6a et sous les lignes 4b, 5b et 6b représentent des valeurs interdites d'amplification pour un signal de communication d'une fréquence particulière.

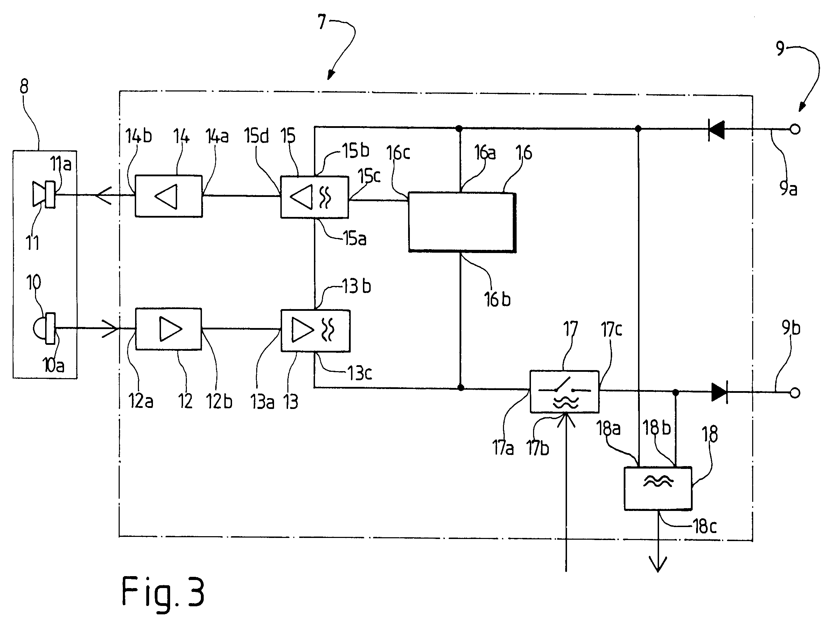

Comme on le voit sur à la figure 3, il est représenté de façon générale un schéma bloc d'un circuit d'interface 7 selon la présente invention, un dispositif téléphonique 8 et une ligne téléphonique 9. Le dispositif téléphonique 8 comporte, d'une façon connue, un microphone 10 destiné à produire des signaux électriques représentatifs des variations de pression des ondes sonores détectées quand un utilisateur parle dans le microphone 10. Le dispositif téléphonique 8 comporte de même, de façon connue, un écouteur 11 pour recevoir des signaux électriques représentatifs d'un message vocal et pour produire des ondes sonores correspondantes, de sorte que le message vocal puisse être entendu. Tandis que le circuit d'interface 7 sera décrit en combinaison avec ce dispositif téléphonique 8, on comprendra qu'il peut être utilisé en combinaison avec d'autres dispositifs, tel qu'un télécopieur, un répondeur téléphonique ou d'autres moyens de télécommunication destinés à être utilisés sur une ligne téléphonique.

Le circuit d'interface 7 comporte essentiellement des circuits amplificateurs 12, 13, 14, un circuit soustracteur 15 et des moyens 16 d'ajustement des caractéristique en courant continu. Un circuit 17 de connexion à la ligne et un circuit 18 détecteur d'appel ont de même été incorporés dans le mode de réalisation du circuit d'interface représenté sur la figure 3. Le microphone 10 comporte une sortie 10a pour envoyer les signaux électriques représentatifs du message fournit par un utilisateur, à une entrée 12a du circuit amplificateur 12. Le circuit amplificateur 12 comporte une caractéristique de réponse amplitude-fréquence telle que les signaux électriques à l'entrée 12a, qui sont dans une gamme de fréquences sélectionnées soient modulés selon une relation particulière entre le gain et la fréquence, tandis que les signaux électriques à l'entrée 12a, en dehors de cette gamme, soient fortement atténués.

Les circuits amplificateurs 12 et 13 sont connectés en cascade, si bien que les signaux électriques modulés par le circuit amplificateur 12 sont transmis depuis une sortie 12b du circuit amplificateur 12 à une entrée 13a du circuit amplificateur 13 qui présente une fonction de transfert qui ne varie pas avec la fréquence. Le gain des signaux à l'entrée 13a est ainsi ajusté par une quantité sur toute la plage de fréquences. De préférence, les circuits amplificateurs 12 et 13 sont non-interactifs de sorte qu'un changement dans la fonction de transfert de l'un ne peut pas affecter la fonction de transfert de l'autre. Dans d'autres modes de réalisation de l'invention, les caractéristiques de réponse amplitude-fréquence des circuits amplificateurs 12 et 13 peuvent être échangée.

Le circuit amplificateur 13 comporte une sortie positive 13b et une sortie négative 13c connectées respectivement à une entrée 15a du circuit soustracteur 15 et à une entrée 17a du circuit de connexion 17. Le circuit soustracteur 15 comporte une sortie 15b qui relie l'entrée 15a et ainsi la sortie 13b à un fil positif 9a de la ligne téléphonique 9. Le circuit de connexion 17 comporte une entrée 17b pour recevoir, dans le dispositif téléphonique 8, un signal de connexion depuis l'extérieur, par exemple, quand le combiné est décroché de son support, pour ainsi connecter l'entrée 17a à une sortie 17c, et ainsi la sortie 13c à un fil négatif 9b de la ligne téléphonique 9.

Les sorties 13b et 13c appliquent ainsi les signaux électriques créés par le microphone 10 et modulés par les circuits amplificateurs 12 et 13, aux fils positif 9a et négatif 9b de la ligne téléphonique 9. Le circuit amplificateur 13 comporte un ou plusieurs opto-coupleurs et d'autres moyens d'isolation électrique afin de protéger la ligne téléphonique 9 et les autres dispositifs téléphoniques éloignés connectés à celle-ci, des surtensions et d'autres conditions défavorables que le circuit d'interface 7, le dispositif téléphonique 8 et d'autres sources de puissance associées peuvent provoquer.

Les moyens 16 d'ajustement des caractéristiques en courant continu sont reliés par leurs sorties 16a et 16b respectivement, au fil positif 9a de la ligne téléphonique 9 et à l'entrée 17a du circuit de connexion 17. Une autre sortie 16c des moyens d'ajustement 16 fournit un signal qui représente la tension entre le fil positif 9a et le fil négatif 9b, à une entrée 15c du circuit sous traction 15. Les moyens 16 ont une impédance interne suffisamment faible par rapport au circuit soustracteur 15 et au circuit amplificateur 13, de telle sorte que lorsqu'un signal de communication se trouve sur la ligne téléphonique 9, le courant effectif de la composante continue du signal est amené à circuler dans les moyens d'ajustement 16. L'impédance interne des moyens 16 détermine ainsi la relation entre la tension et le courant de la composante continue se trouvant sur la ligne téléphonique 9. l'impédance des moyens 16 peut de même être modifiée de façon automatique, en réponse à la tension de la composante continue. Ainsi, une caractéristique en courant continu du circuit d'interface 7 et du dispositif téléphonique 8 peut être choisie de manière à éviter les régions interdites représentées sur la figure 1.

Le circuit soustracteur 15 est conformé pour comparer les signaux se trouvant à ses entrées 15c et 15a pour séparer tout signal de communication reçu depuis des dispositifs téléphoniques à distance, des signaux de communication appliqués à la ligne téléphonique 9, par le circuit d'interface 7 lui-même. Les signaux se trouvant à l'entrée 15a représentatifs des signaux de communication appliqués sur la ligne téléphonique 9 par le circuit d'interface 7 sont soustraits par le circuit soustracteur 15 des signaux présents à l'entrée 15c qui sont représentatifs de tout signal présent sur la ligne téléphonique 9, c'est-à-dire les signaux placés sur la ligne téléphonique 9 par le circuit d'interface 7 et de même par des dispositifs téléphoniques à distance. Des opto-coupleurs ou d'autres moyens similaires sont de même utilisés pour fournir l'isolation électrique entre le circuit soustracteur 15, les moyens d'ajustement des caractéristiques en courant continu 16 et le circuit amplificateur 13.

Le circuit soustracteur 15 est relié en cascade au circuit amplificateur 14 par une sortie 15d qui relie le circuit soustracteur 15 à une entrée 14a du circuit amplificateur 14. De manière similaire au circuit amplificateur 12, le circuit amplificateur 14 présente une caractéristique de réponse amplitude-fréquence qui varie avec la fréquence, de sorte que les signaux qui ont des fréquences se situant à l'intérieur d'une gamme choisie, ont leur amplitude modulée selon une relation particulière entre la fréquence et le gain, tandis que les signaux qui présentent une fréquence en dehors de cette gamme sélectionnée sont fortementt atténués. Le circuit soustracteur 15, d'une façon similaire au circuit amplificateur 13, présente une fonction de transfert dqui ne varie pas avec la fréquence de sorte que le gain des signaux se trouvant à l'entrée 14a est ajusté par une valeur qui ne dépend pas de la fréquence du signal. De préférence, le circuit amplificateur 14 et le circuit soustracteur 15 ne sont pas interactifs.

Ainsi, la fonction de transfert linéaire des signaux reçus et/ou émis par le dispositif téléphonique peuvent être choisis pour éviter les régions interdites représentées sur la figure 2 pour un certain nombre de pays différents.

Le circuit amplificateur 14 présente une sortie 14b reliée à une entrée 11a de l'écouteur 11, de sorte que les signaux reçus sur la ligne téléphonique 9, et modulés par ce circuit soustracteur 15 et le circuit amplificateur 14, sont transformés en des ondes sonores et perçus par l'utilisateur du dispositif téléphonique 8. Enfin, le circuit détecteur d'appel 18 du circuit d'interface 7 comporte deux entrées 18a et 18b connectées respectivement au fil positif 9a et au fil négatif 9b de la ligne téléphonique 9. Lorsque la présence du signal d'appel sur la ligne téléphonique 9 est détectée, un signal de détection correspondant est transmis depuis une sortie 18c du circuit de détection 18 à un autre endroit du dispositif téléphonique 8.

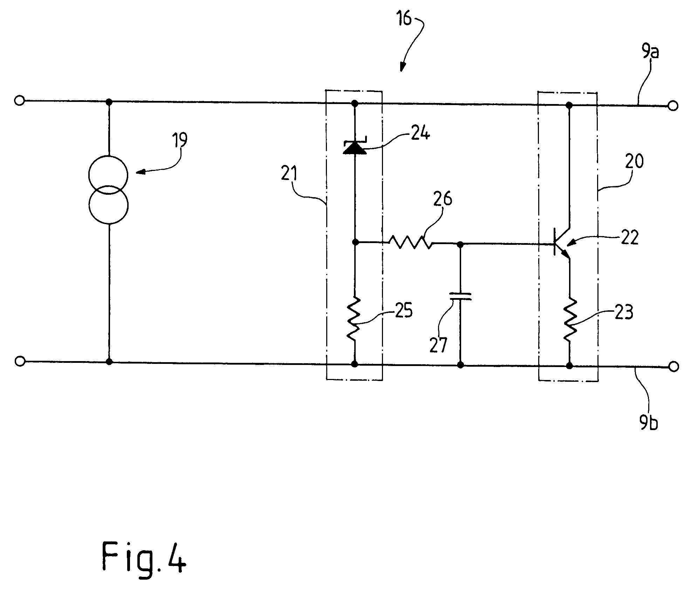

La figure 4 représente un mode de réalisation des moyens 16 d'ajustement des caractéristiques en courant continu, et comporte essentiellement une source de courant constant 19, une branche 20 d'un circuit de commutation et une branche 21 d'un circuit de commande de commutation. La source 19 de courant constant est reliée entre le fil positif 9a et le fil négatif 9b de la ligne téléphonique 9 et fournit un courant constant à la ligne téléphonique 9 à un niveau constant quand la tension de la composante continue sur la ligne téléphonique 9 est supérieure à une tension de fonctionnement minimale de faible niveau. La conception détaillée de la source 19 de courant constant n'a pas été représentée sur la figure 4, puisque de telles sources de courant sont bien connues de l'homme du métier.

La branche 20 du circuit de commutation comporte un transistor de commutation 22 connecté par son collecteur au fil 9a et par son émetteur à une borne de l'élément de résistance 23. L'autre borne de l'élément de résistance 23 est connectée au fil 9b. Quand une tension est appliquée à la base du transistor 22 ce qui leur rend conducteur, un courant circule depuis le fil 9a au travers de la résistance 23, vers le fil 9b.

La branche 21 du circuit de commande de commutation comporte une diode zener 24 connectée par sa cathode au fil positif 9a et par son anode à une borne d'un élément d'impédance 25, dont l'autre borne est connectée au fil ou 9b. L'anode de la diode zener 24 est connectée à la base du transistor 22 via une résistance de polarisation 26 et un condensateur de lissage 27. Quand la tension aux bornes de la diode zener 24 dépasse sa tension de claquage, la diode zener devient conductrice et une tension suffisante pour faire conduire le transistor 22 est appliquée à la base du transistor 22. A la tension de claquage de la diode zener 24, le transistor 22 est rendu conducteur mais un courant négligeable circule dans la résistance 23. De façon similaire, un courant négligeable circule dans la résistance 26 ver la base du transistor 22. La tension continue entre les fils 9a et 9b à cette valeur est ainsi égale à la somme de la tension de claquage de la diode zener 24 et de la tension base-émetteur (qui est faible et approximativement constante) du transistor 22. Ainsi, la tension à laquelle le transistor 22 commence à être conducteur est déterminée de façon simple en choisissant de façon appropriée la tension de claquage de la diode zener 24.

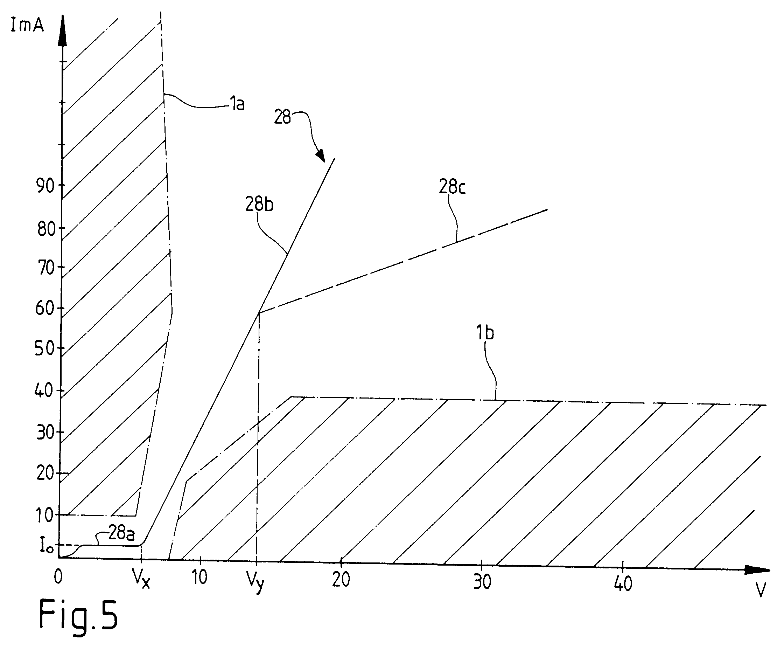

Sur la figure 5, on a représenté la caractéristique en courant continu pour la Suisse, qui est représentée sur la figure 1, les régions entre la courbe 1a et l'axe vertical, et entre la courbe 1b et l'axe horizontal représentant de même des rapports interdits de courant-tension continus sur une ligne téléphonique en Suisse. Les moyens d'ajustement 16 des caractéristiques en courant sont conformés pour fixer la relation entre la composante continue du courant et la composante continue de la tension d'un signal de communication sur la ligne téléphonique 9, afin d'éviter ces zones interdites, comme on l'expliquera ci-après.

Un tracé représentatif de la relation déterminée par le circuit 16 est représenté par la courbe 28. La partie 28a de la courbe 28 est assurée par la source de courant constant 19 qui fournit un courant continu constant $I_0$ au-dessus d'une tension de fonctionnement minimale continue. Quand la tension de la composante continue dépasse $V_x$ (celle qui est nécessaire pour le claquage de la diode zener 24), un courant est amené à circuler dans la résistance 23, lequel suit la relation suivante

$$I = V/R_{dc}$$

où $R_{dc}$ est la valeur de la résistance 23. Ainsi, la branche 20 du circuit de commutation fournit une première composante en courant sur la ligne téléphonique pour des valeurs de tension continue entre les fils 9a et 9b au-dessus de $V_x$, tandis que la source de courant constant 19 fournit une deuxième composante de courant continu à une valeur constante $I_0$.

Le niveau du courant constant $I_0$ peut être ajusté par une sélection appropriée de la source de courant constant 19. La pente de la courbe 28b peut être ajustée en sélectionnant la valeur la résistance 23. La tension $V_x$ peut de même être ajustée en choisissant une diode zener 24 comportant une tension de claquage choisie. Ainsi, la caractéristique en courant continu de l'appareil téléphonique peut simplement être déterminée pour être adéquate dans un certain nombre de pays, sans ajustement. De plus, si on a constaté qu'une certaine modification de la caractéristique en courant continu est nécessaire, ceci peut être réalisé sans analyse complexe des circuits, mais par le simple remplacement ou la modification de la valeur d'un des composants de circuit.

Cette modification peut être réalisée au niveau des moyens d'ajustement, représentés sur la figure 1, dans les cas rares où une telle modification peut être souhaitée. Pour un pays tel que la France, une autre diode zener peut être ajoutée au circuit d'interface 7, laquelle diode zener présente une cathode connectée à la base du transistor 22 et une anode reliée au fil négatif 9b. La tension de claquage de cette diode zener supplémentaire peut être choisie de sorte qu'elle modifie la relation entre le courant et la tension de la composante continue au-dessus d'une tension spécifique $V_y$, comme représenté par la partie 28c du tracé 28. La pente de cette partie 28c est déterminée par la valeur de l'élément d'impédance 25.

De plus, pour un pays tel que la Grande-Bretagne qui exige une limitation en courant de la caractéristique continue, représentée sur la figure 5, un transistor supplémentaire peut être ajouté au circuit, lequel a son collecteur relié à la base du transistor 22 et son émetteur relié au fil 9b. La résistance 23 est séparée en deux sous-éléments interconnectés, la base du transistor additionnel étant connectée entre ceux-ci. Si le courant continu I dépasse un niveau choisi, le transistor supplémentaire est rendu conducteur et permet la conduction du courant depuis la résistance 26 jusqu'au fil 9b, plutôt que de l'amener à la base du transistor 22 et de rendre ce dernier conducteur.

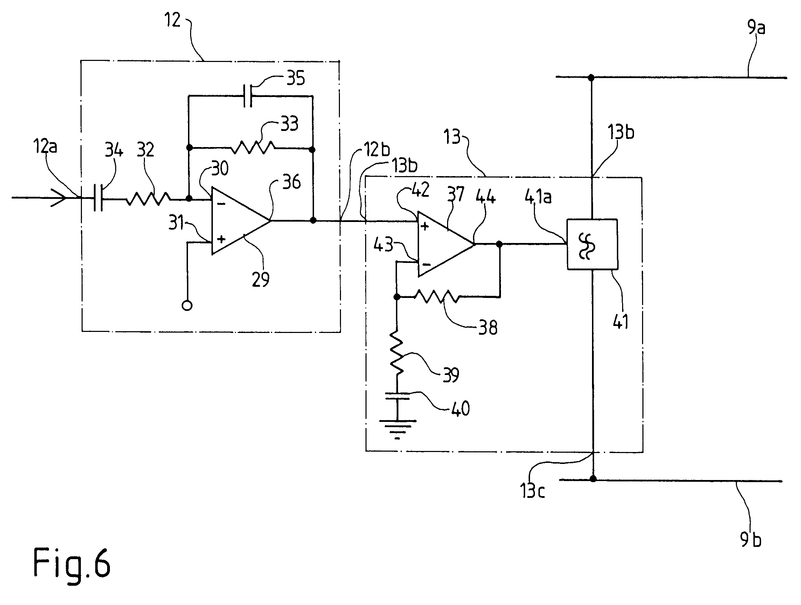

Comme on le voit sur la figure 6, il est représenté un mode de réalisation des circuits amplificateur 12 et 13 du circuit d'interface 7 représenté à la figure 3. Comme le comprendra l'homme du métier, les caractéristiques des circuits amplificateurs 12 et 13 peuvent être fournies par plusieurs configurations de circuits, le mode de réalisation représenté sur la figure 1 n'étant qu'une de ces configurations. Le circuit amplificateur 12 consiste en un amplificateur opérationnel 29, comportant une entrée inverseuse 30 et une entrée non-inverseuse 31, des résistances 32 et 33 et des condensateurs 34 et 35. La résistance 32 et le condensateur 34 sont connectées en série entre l'entrée 12a du circuit amplificateur 12 et l'entrée non-inverseuse 30. La résistance 33 et le condensateur 35 sont connectés en parallèle entre l'entrée inverseuse 30 et la sortie 36 de l'amplificateur opérationnel 29. Une tension de référence est appliquée à l'entrée non-inverseuse 31 de l'amplificateur opérationnel 29.

A partir d'une analyse de ce circuit, on a établi que la tension à la sortie 36 suit la relation

$$V_o = U_{ref} - i . [ (R_{33}.1/j\omega C_{35}) / (R_{33} + 1/j\omega C_{35})]$$

où i est le courant circulant dans la résistance 32, $R_{33}$ et $C_{35}$ sont respectivement les valeurs de la résistance et de la capacité de la résistance 33 et du condensateur 35 et $U_{ref}$ est la tension de référence appliquée à l'entrée non-inverseuse 31. Puisque le courant i est égal à $(v_i - U_{ref}) / (R_{32} + 1/j\omega C_{34})$, où $v_i$ est la tension à l'entrée 12a et $R_{32}$ et $C_{34}$ sont respectivement les valeurs de la résistance et de la capacité de la résistance 32 et du condensateur 34, on obtient

$$(v_o - U_{ref}) / (v_i - U_{ref}) = (R_{33}.j\omega C_{34}) / [(1 + R_{33}.j\omega C_{35}) . (1 + R_{32}.j\omega C_{34})]$$

La fonction de transfert $v_o/v_i$ de l'amplificateur opérationnel 29 peut ainsi être considérée comme dépendante de la fréquence, le tracé de la fonction de transfert présentant des fréquences de claquage et des asymptotes définies par les valeurs de résistances $R_{32}$ et $R_{33}$ et des condensateurs $C_{34}$ et $C_{35}$.

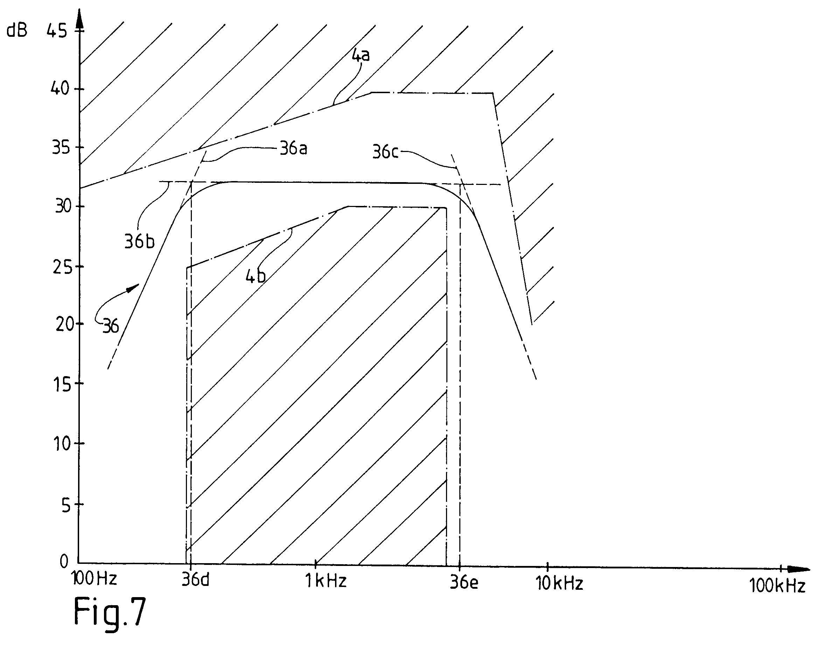

En se référant désormais à la figure 7, on a de même tracé la caractéristique de la fonction de transfert en Suisse, comme représentée sur la figure 2, les régions au-dessus de la courbe 4a et sous la courbe 4b représentant les valeurs interdites d'amplification du dispositif téléphonique 8, en décibels, pour une gamme de fréquences. Le circuit amplificateur 12 peut être utilisé, par une sélection appropriée des valeurs de résistances $R_{32}$ et $R_{33}$ et des condensateurs $C_{34}$ et $C_{35}$, afin de fournir une fonction de transfert ayant la forme du tracé 36, avec des assymptotes 36a, 36b et 36c et des fréquences de coupure 36d et 36e de sorte que la fonction de transfert du dispositif téléphonique 8 évite les zones interdites représentées.

Le circuit amplificateur 13 représenté sur la figure 6 comporte essentiellement un amplificateur opérationnel 37, des résistances 38 et 39, un condensateur 40 et un circuit d'isolation 41. L'amplificateur opérationnel 37 comporte une entrée non-inverseuse 42, une entrée inverseuse 43 et une sortie 45. L'entrée non-inverseuse 42 est reliée par une entrée 13b du circuit amplificateur 13 à la sortie 12b du circuit amplificateur 12. La résistance 38 est reliée entre l'entrée inverseuse 43 et la sortie 44 pour fournir un signal de rétroaction à l'amplificateur opérationnel 37. La résistance 39 est connectée en série avec le condensateur 40 entre l'entrée inverseuse 43 et la masse.

La sortie 44 de l'amplificateur opérationnel 13 est connectée à une entrée 41a du circuit d'isolation 41. En comportant de même des opto-coupleurs et d'autres dispositifs d'isolation électriques appropriés pour protéger les circuits amplificateurs 12 et 13, le circuit d'isolation 41 applique le signal à la sortie 44 sur la ligne téléphonique 9 via les sorties 13b et 13c.

Comme on peut le voir de l'analyse du circuit représenté sur la figure 6, la fonction de transfert du circuit amplificateur 13 est effectivement donnée par la relation

$$H = 1 + R_{38}/(R_{39} + 1/\omega C_{40})$$

pour les signaux dans la gamme audio de 300 Hz à 3400 Hz, où $R_{38}$, $R_{39}$ et $C_{40}$ sont respectivement les valeurs de la résistance des résistances 38 et 39, et de la capacité du condensateur 40. Si $R_{35}$ est choisi pour être nettement supérieure à $1/\omega C_{40}$, la fonction de transfert est effectivement donnée par la relation $H = 1 + R_{38}/R_{39}$, qui est une fonction indépendante de la fréquence.

En se référant désormais à la figure 2, on voit que les caractéristiques de la fonction de transfert de transmission imposées en Suisse, en Allemagne et en Suède sont toutes d'une forme similaire, mais sont déplacées en termes de valeur absolue, le tracé pour l'Allemagne ayant été déplacé verticalement sur le graphe de +19,5 dB et le tracé pour la Suède étant de même déplacé de +2,5 dB. Le schéma peut être répété pour d'autres pays en plus de ces pays représentés, donnés ici à titre d'exemple. Comme on le comprendra, les résistances 32 et 33 et les condensateurs 34 et 35 peuvent être choisis de sorte que la fonction de transfert du circuit amplificateur 12 ait une forme appropriée pour éviter les zones interdites représentées sur la figure 2, tandis que la valeur des résistances 38 et 39 peut être choisie pour que le circuit amplificateur 13 déplace de façon uniforme la réponse amplitude-fréquence du circuit amplificateur 12 d'un certain niveau pour l'utilisateur du dispositif téléphonique 8 dans un pays donné.

Alors que les caractéristiques des fonctions de transfert d'émission ont uniquement été représentées sur les figures 2 et 7, on comprendra que des caractéristiques similaires des fonctions de transferts de réception existent dans chaque pays et que le circuit comparateur 14 et le circuit soustracteur 15 peuvent être adaptés en utilisant le même principe, afin de satisfaire les caractéristiques exigées.

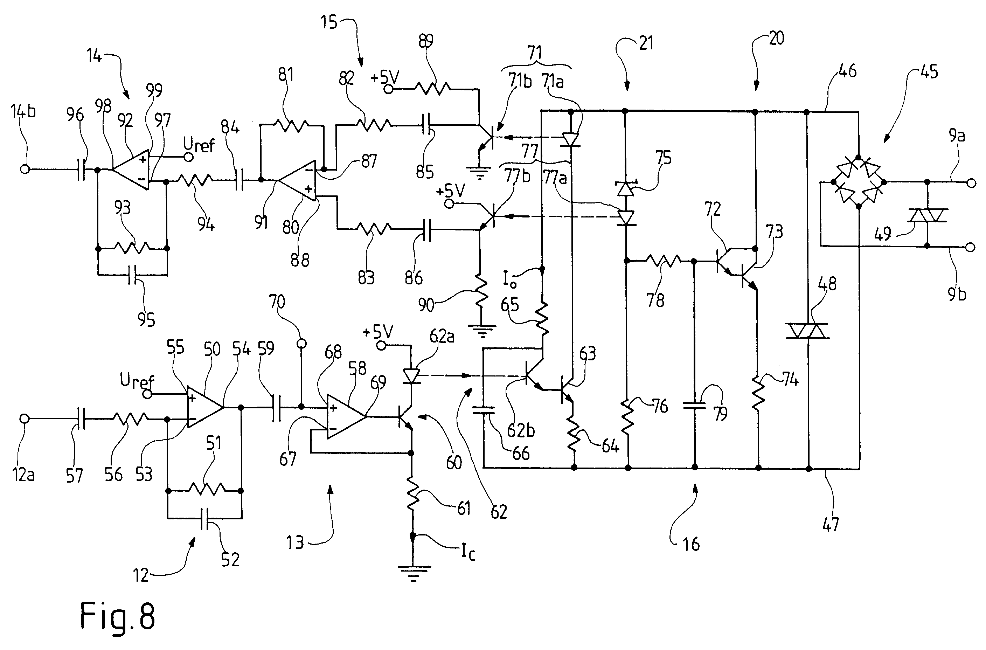

La figure 8 représente un schéma de circuit simplifié d'un mode de réalisation du circuit d'interface 7, qui comporte essentiellement les circuits amplificateurs 12, 13 et 14, le circuit soustracteur 15 et les moyens d'ajustement 16. Une source de courant constant est incorporée dans ce mode de réalisation des moyens 16 mais on comprendra qu'une telle source n'est pas forcément nécessaire dans d'autres modes de réalisation. Un pont redresseur à double alternance 45 est connecté entre le fil positif 9a et le fil négatif 9b de la ligne téléphonique 9 pour fournir un signal de communication redressé au fil positif 46 et au fil négatif 47. Des paires de diodes 48 et 49, dont la cadhode de l'une d'elles est reliée à l'anode de l'autre, sont connectées respectivement entre les fils 9a et 9b et entre les fils 46 et 47 afin d'empêcher le circuit d'interface 7 et le dispositif téléphonique 8 de supporter tous deux des surcharges positive et négative. Le circuit 17 de connexion, le circuit 18 de détection d'appel et d'autres éléments de circuits tels qu'un commutateur de combiné à un circuit de sélection de numéros, etc, nécessaires au fonctionnement du dispositif téléphonique 8 ont été omis dans la figure 8 dans un but de simplification des dessins.

Le circuit amplificateur 12 comporte un amplificateur opérationnel 50, auquel sont associés une résistance 51 et un condensateur 52 connectés en parallèle entre son entrée inverseuse 53 et sa sortie 54. Son entrée non-inverseuse 55 est connectée à une tension de référence $U_{ref}$. Une résistance 56 et un condensateur 57 sont connectés en série entre l'entrée inverseuse 53 et l'entrée 12a raccordée au microphone 10. Des signaux de message émis par le microphone 10 sont modulés et transmis à la sortie 54 selon une fonction de transfert qui transfert en fait uniquement des signaux de message à l'intérieur d'une bande de fréquence autorisée, et amplifie ces signaux selon une gamme permise de valeurs, comme décrit ci-dessus.

La sortie 54 de l'amplificateur opérationnel 50 est reliée au circuit amplificateur 13 comportant un amplificateur opérationnel 58, un condensateur 59, un transistor 60 et une résistance 61, un opto-coupleur 62 comportant une diode électroluminescente infra-rouge 62a et un phototransistor au silicium 62b, un transistor 63, des résistances 64 et 65 et un condensateur 66. L'amplificateur opérationnel 58 comporte une entrée inverseuse 67, une entrée non-inverseuse 68 et une sortie 69. Une tension de référence continue est fournie à une borne 70 qui est connectée à l'entrée non-inverseuse 68. Le condensateur 59 est relié entre la sortie 54 du circuit amplificateur 12 et l'entrée non-inverseuse 68, de sorte que les signaux de message modulés par le circuit amplificateur 12 sont ensuite appliqués au circuit amplificateur 13.

La sortie 69 de l'amplificateur opérationnel 58 est reliée à la base du transistor 60. Le collecteur du transistor 60 est relié à une alimentation interne, via la diode électroluminescents infra-rouge 62a, tandis que son émetteur est connecté à la masse via la résistance 61. L'entrée inverseuse 67 de l'amplificateur opérationnel est de même reliée à l'émetteur du transistor 60, de sorte que l'amplificateur opérationnel constitue un suiveur de tension et la tension de référence continue à la borne 70 se retrouve aux bornes de la résistance 61. Ainsi, un courant continu constant $I_c$ est créé, lequel circule au travers de la diode électroluminescente infra-rouge 62a et de la résistance 61.

Des signaux de message sont reçus à l'entrée non-inverseuse 68 de l'amplificateur opérationnel 58 et sont transmis à partir de la sortie 69 de celui-ci à la base du transistor 61 pour l'amplification. Le phototransistor au silicium 62b et le transistor 63 sont reliés ensemble entre les fils 46 et 47. Le collecteur du phototransistor 62b est relié au fil 46 via la résistance 65, tandis que son émetteur est relié à la base du transistor 63. Le collecteur du phototransistor 62b est de même relié au fil 47 par un condensateur 66. Le collecteur du transistor 63 est relié au fil 46 via une diode électroluminescente infra-rouge 71a, formant ensemble avec un phototransistor 71b un opto-coupleur 71, tandis que son émetteur est connecté au fil 47 via la résistance 64.

Le phototransistor au silicium 62b est rendu conducteur quand il reçoit la lumière infra-rouge de la diode électroluminescente infra-rouge 62a ce qui provoque, de façon subséquente, la conduction du transistor 63, la circulation d'un courant au travers du phototransistor 71a et au travers de la résistance 64 et l'apparition une tension entre les fils 46 et 47. Des signaux de message modulés reçus de la sortie 69 sont ainsi appliqués sur la ligne, consistant en les fils 46 et 47, pour l'émission vers un autre appareil téléphonique.

De plus, la composante en courant continu circulant dans les diodes électroluminescentes infra-rouge 62a est amplifiée par le phototransistor 62b, le transistor 63 et leurs résistances associées 64 et 65 ainsi que leur condensateur 66 pour fournir un courant continu constant $I_0$ qui est une fonction du courant continu constant $I_c$. Ainsi, une composante du courant continu sur la ligne téléphonique 9 comme représenté par la partie 28a de la courbe 28 sur la figure 6, peut être fournie par la sélection appropriée de la tension de référence continue à la borne 70.

La branche 20 du circuit de commutation du mode de réalisation des moyens 16 représentés sur la figure 8 comporte un transistor 72 couplé à un autre transistor 73 et une résistance 74. L'émetteur du transistor 72 est relié à la base du transistor 73, et les collecteurs des deux transistors 72 et 73 sont reliés ensemble au fil 46. L'émetteur du transistor 73 est relié au fil 47 via la résistance 74. La branche 21 du circuit de commande de commutation comporte une diode zener 75 et une résistance 76. La cadhode de la diode zener 75 est reliée au fil 46 tandis que son anode est reliée à une borne de la résistance 76 via une diode électroluminescente infra-rouge 77a, formant ensemble avec un phototransistor 77b, un opto-coupleur 77. L'autre borne de la résistance 76 est reliée au fil 47. Les branches 21 et 22 sont reliées ensemble par une résistance 78 entre une borne de la résistance 76 et la base du transistor 72. Un condensateur 79 de lissage de tension est reliée entre la base du transistor 72 et le fil 47.

En considérant désormais la composante continue du signal placé sur la ligne constituée par les fils 46 et 47, par le transistor 64, si la tension entre les fils 46 et 47 est plus faible que celle requise pour le claquage de la diode zener 75, le courant est empêché de circuler dans la branche 21 et empêche ainsi de rendre conducteurs les transistors 72 et 73, en empêchant le courant de circuler dans la branche 20. Les valeurs élevées de la résistance 66 et du condensateur 67 font que les fils 46 et 47, et ainsi la ligne téléphonique 9, sont effectivement en circuit ouvert. Quand la tension de la composante continue augmente de façon suffisante, la diode zener 75 claque et la branche 21 du circuit de commande de commutation devient conducteur. A ce point, la tension entre les fils 46 et 47 est égale à la somme de la tension de claquage de la diode zener, des tensions base/émetteur dans les transistors 72 et 73 (étant toutes les deux à la fois faibles et approximativement constantes), et de la tension dans la diode électroluminescente infra-rouge 77a (de même faible et approximativement constante). La résistance 78 et la capacité 79 provoquent une application de la tension à la base du transistor 72 ce qui rend ce transistor 72 ainsi que le transistor 73 conducteurs de sorte que le courant est amené à circuler dans la résistance 74.

Comme expliqué ci-avant, la tension entre les fils 46 et 47 à laquelle la diode zener 75 est conductrice, est effectivement uniquement dépendante de la tension de claquage de cette diode, de sorte que la diode zener 75 peut être changée sans affecter d'autres composants de circuit. De plus, l'impédance de la résistance 66 et du condensateur 67, et de la résistance 76, peuvent être sélectionnées pour être beaucoup plus grandes que celle de la résistance 74, de sorte que la composante continue du courant peut être considérée comme passant entièrement dans la branche de circuit 20. La relation entre la composante continue du courant et de la tension entre les fils 46 et 47, quand la tension est suffisamment grande pour que la diode zener 75 soit conductrice, peut être réglée simplement en sélectionnant une valeur appropriée de la résistance 74.

Afin de fournir des signaux à la sortie 14b et ainsi à l'écouteur 11 de sorte qu'ils puissent être entendus par un utilisateur du dispositif téléphonique 8, la diode électroluminescente infra-rouge 77a est reliée entre la diode zener 75 et l'élément d'impédance 76 pour fournir une lumière infra-rouge d'une intensité proportionnelle à la tension au travers de celle-ci, à un phototransistor 77b qui forme une partie du circuit soustracteur 15. La diode électroluminescente infra-rouge 71a fournit une lumière infra-rouge proportionnelle au courant circulant dans le transistor 63 et dans la résistance 64 ce qui oblige les signaux à être transmis de l'écouteur 10 à l'entrée 12a. De tels signaux, qui sinon atteindraient l'écouteur du dispositif téléphonique 8, sont connus comme signal d'effet local du signal de communication présent sur la ligne 9.

En plus des opto-coupleurs 71 et 77, le circuit soustracteur 15 comporte essentiellement un amplificateur opérationnel 80, des résistances 81, 82 et 83, et des condensateurs 84, 85 et 86. La résistance 82 et le condensateur 85 sont connectés en série entre l'entrée inverseuse 87 de l'amplificateur opérationnel 80 et le collecteur du phototransistor 71b. La résistance 83 est reliée en série au condensateur 86 entre l'entrée non-inverseuse 88 de l'amplificateur opérationnel 80 et l'émetteur du phototransistor 77b. Le collecteur du phototransistor 71b est connecté via une résistance de polarisation 89 à une alimentation interne, tandis que son émetteur est connecté à la masse. Le collecteur du phototransistor 77b est connecté à une alimentation interne, et son émetteur est connecté via une résistance de polarisation 90 à la masse.

Le circuit soustracteur 15 soustrait le signal de la diode électroluminescente infra-rouge 71a du signal émis par la diode électroluminescente infra-rouge 77, pour ainsi rendre inopérant le signal de communication placé sur la ligne 9 par le circuit d'interface 7 et ne séparer que les signaux de communication reçus par le circuit d'interface 7 depuis le dispositif de télécommunication à distance. L'utilisation d'opto-coupleurs dans le dispositif de télécommunication introduit un déphasage des signaux transmis au travers de ceux-ci. Cependant, l'utilisation des opto-coupleurs 71 et 77 pour fournir à la fois un signal représentatif de l'effet local et l'ensemble des signaux de communication présents sur la ligne 9, permet de façon avantageuse au signal d'effet local d'être soustrait du signal de communication d'une façon simple, pour qu'ainsi l'ajustement de la phase de l'un des signaux pour compenser le décalage de phase de l'autre ne soit pas nécessaire.

La résistance 81 est reliée entre la sortie 91 de l'amplificateur opérationnel 80 et son entrée inverseuse 87 et sa valeur, par rapport à la résistance 82 et ou condensateur 85, est choisie de sorte que le circuit soustracteur 15 présente une fonction de transfert ne variant pas avec la fréquence, de sorte que le gain de la différence entre les signaux de communication et d'effet local présents sur la ligne téléphonique 9 soient ajustés par une valeur uniforme sur la totalité de la gamme de fréquences.

La sortie 91 de l'amplificateur opérationnel 80 est reliée par le condensateur 84 du circuit amplificateur 14 qui comporte essentiellement un amplificateur opérationnel 92 des résistances 93 et 94 et des condensateurs 95 et 96. La résistance 93 et le condensateur 95 sont reliées en série entre l'entrée inverseuse 97 et la sortie 98 de l'amplificateur opérationnel 92. La résistance 94 est reliée entre l'entrée inverseuse 97 et le condensateur 84. L'entrée non-inverseuse 99 de l'amplificateur opérationnel 92 est connectée à l'alimentation en tension $U_{ref}$. Comme décrit en liaison avec la figure 6, les valeurs des résistances 93 et 94 et des condensateurs 95 et 96 peuvent être choisies de sorte que le circuit amplificateur 14 présente une caractéristique de réponse amplitude-fréquence telle que les signaux électriques transmis au condensateur 84 dans une gamme de fréquence choisie soient modulés selon une relation particulière entre le gain et la fréquence, tandis que les signaux électriques endehors de cette gamme sont fortement atténués. Les valeurs des résistances 93 et 94 et des condensateurs 95 et 96 sont choisies pour ajuster les fréquences de coupure et les asymptotes d'une courbe de la fonction de transfert du circuit amplificateur 14 afin d'éviter des zones interdites similaires à celles représentées sur la figure 7.

On peut voir que sur la figure 8 dans les conditions sans charge, les transistors 63b, 64, 72 et 73 sont tous dans un état non-conducteur et que les opto-coupleurs 63, 71 et 77 isolent les circuits 12, 13, 14 et 15 de la ligne téléphonique 9. Les valeurs de la résistance 66 et du condensateur 67 sont choisies nettement supérieures à celles de l'élément d'impédance 74 de sorte que l'impédance de sortie alternative du dispositif téléphonique présent sur la ligne téléphonique 9 est effectivement déterminée par l'élément d'impédance 76. Si l'impédance de sortie alternative doit être réelle dans un pays donné, une résistance ayant une valeur appropriée peut être choisie. Si l'impédance de sortie alternative doit être complexe, une combinaison appropriée des résistances et des condensateurs peuvent simplement être choisies.

On comprendra de ce qui vient d'être décrit, qu'on a fournit un circuit d'interface ayant des premiers moyens de réglage 20, 21 qui comportent une première branche de circuit 20 comportant un transistor de commutation 22 ayant une première et une seconde électrodes principales et une électrode de commande, la première électrode principale étant connectée au fil positif, et un élément de résistance $R_{dc}$ 23 relié entre la seconde électrode principale et le fil négatif, et des moyens 21 de commande de commutation connectés à l'électrode de commande, les moyens de commande de commutation appliquant un signal de commutation à l'électrode de commande pour ainsi rendre conducteur le transistor 22 quand la tension continue V est supérieure à $V_x$, pour extraire une première composante du courant continu I au travers de la première ligne de circuit pour que $I_1$ soit égal à $(V-V_x)/R_{dc}$.

Plus particulièrement, les moyens 21 de commande de commutation comportent une seconde branche de circuit comportant un dispositif de commutation 24 relié entre le fil positif 9a et l'électrode de commande, et un élément d'impédance $Z_{tel}$ 25 relié entre l'électrode de commande et le fil négatif (9b), le dispositif de commutation (24) étant destiné à provoquer la conduction de la seconde branche de circuit pour appliquer ainsi le signal de commutation à l'électrode de commande quand la tension continue V est supérieure à $V_x$.

On comprendra aussi que le dispositif de commutation 24 est une diode zener dont la cathode est connectée au fil positif 9a et dont l'anode est connectée à l'électrode de commande.

De plus, les moyens 16 comporte de plus une source 19 de courant continu constant reliée entre les fils positif et négatif 9a, 9b de la ligne téléphonique 9 pour ajuster une deuxième partie du courant constant I à une valeur constante $I_0$.

On voit aussi que le dispositif de télécommunication 8 présente une impédance de sortie alternative fournie par l'élément d'impédance $Z_{tel}$ 25 qui est réel.

Enfin, on comprendra que le circuit d'interface selon l'invention peut comprendre diverses modifications et/ou adjonctions sans sortir du cadre de la présente invention.

## Revendications

1. Circuit d'interface destiné à être utilisé en combinaison avec un dispositif de télécommunication (8) pour émettre et recevoir un signal de communication via une ligne téléphonique (9) comportant un fil positif et un fil négatif (9a, 9b), ce circuit comportant
des moyens (16) d'ajustement des caractéristiques en courant continu pour ajuster la relation entre un courant continu I sur ladite ligne téléphonique (9) et une tension continue correspondante V entre lesdits fils respectivement positif et négatif (9a, 9b), caractérisé en ce que lesdits moyens d'ajustement (16) comportent des premiers moyens de réglage (20, 21) reliés entre lesdits fils positif et négatif (9a, 9b) pour régler une première partie dudit courant continu I à une valeur $I_1$ proportionnelle à une valeur $V-V_x$ quand ladite tension continue V est supérieure à $V_x$, où $V_x$ est une valeur prédéterminée de ladite tension continue V, et à une valeur sensiblement égale à zéro quand ladite tension continue V est inférieure à $V_x$.

2. Circuit d'interface selon la revendication 1, caractérisé en ce que lesdits premiers moyens de réglage (20, 21) comportent une première branche de circuit (20) comportant un transistor de commutation (22) ayant une première et une seconde électrodes principales et une électrode de commande, la première électrode principale étant connectée au fil positif, et un élément de résistance $R_{dc}$ (23) relié entre ladite seconde électrode principale et ledit fil négatif, et des moyens (21) de commande de commutation connectés à ladite électrode de commande, lesdits moyens de commande de commutation appliquant un signal de commutation à ladite électrode de commande pour ainsi rendre conducteur le transistor (22) quand ladite tension continue V est supérieure à $V_x$, pour extraire ladite première composante du courant continu I au travers de ladite première ligne de circuit pour que $I_1$ soit égal à $(V-V_x)/R_{dc}$.

3. Circuit d'interface selon la revendication 2, caractérisé en ce que les moyens (21) de commande de commutation comportent une seconde branche de circuit comportant un dispositif de commutation (24) relié entre ledit fil positif (9a) et ladite électrode de commande, et un élément d'impédance $Z_{tel}$ (25) relié entre ladite électrode de commande et ledit fil négatif (9b), ledit dispositif de commutation (24) étant destiné à provoquer la conduction de ladite seconde branche de circuit pour appliquer ainsi ledit signal de commutation à ladite électrode de commande quand ladite tension continue V est supérieure à $V_x$.

4. Circuit d'interface selon la revendication 3, caractérisé en ce que ledit dispositif de commutation (24) est une première diode zener dont la cathode est connectée au fil positif (9a) et dont l'anode est connectée à l'électrode de commande.

5. Circuit d'interface selon l'une quelconque des revendications 3 et 4, caractérisé en ce qu'il comporte en plus une deuxième diode zener dont la cathode est connectée à l'électrode de commande et dont l'anode est connectée au fil négatif.

6. Circuit d'interface selon l'une quelconque des revendications précédentes, caractérisé en ce que lesdits moyens (16) comporte de plus une source (19) de courant continu constant reliée entre les fils positif et négatif (9a, 9b) de la ligne téléphonique (9) pour ajuster une deuxième partie du courant constant I à une valeur constante $I_0$.

7. Circuit d'interface selon l'une des revendications 3 à 6, caractérisé en ce que le dispositif de télécommunication (8) présente une impédance de sortie alternative fournie par l'élément d'impédance $Z_{tel}$ (25).

8. Circuit d'interface selon la revendication 7, caractérisé en ce que ledit second élément d'impédance $Z_{tel}$ (25) est réel.

Fig.1

EP 0 585 634 A1

Fig.2

4a,4b – 0 dB
5a,5b – +19.5 dB
6a,6b – + 2.5dB

EP 0 585 634 A1

Fig.3

Fig. 4

Fig.5

EP 0 585 634 A1

Fig.6

Fig.7

Fig.8

EP 0 585 634 A1

Office européen
des brevets

**RAPPORT DE RECHERCHE EUROPEENNE**

Numero de la demande

EP 93 11 2401

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | TOUTE L'ELECTRONIQUE<br>no. 522 , Mars 1987 , PARIS FR<br>pages 83 - 86<br>'UNE INTERFACE LIGNE TELEPHONIQUE/MODEM' | 1 | H04B3/02<br>H04M1/00<br>H04M1/26 |
| Y | * page 84, colonne de gauche, ligne 26 - colonne de droite, ligne 40 *<br>* page 85, colonne de gauche, ligne 38 - ligne 55 *<br>* figures 5-7 *<br>--- | 2-4,7,8 | |
| Y | US-A-5 105 461 (TSURUSAKI ET AL.)<br>* colonne 1, ligne 66 - ligne 68 *<br>* colonne 5, ligne 11 - ligne 20 *<br>* figure 2 *<br>--- | 2-4,7,8 | |
| Y | US-A-4 039 759 (TAYLOR)<br>* abrégé *<br>* colonne 3, ligne 33 - colonne 4, ligne 32 *<br>* revendication 1 *<br>* figure 1 *<br>--- | 2-4,7,8 | |
| A | EP-A-0 093 036 (FAIRCHILD CAMERA & INSTRUMENT COMPANY)<br>* page 5, ligne 10 - page 6, ligne 11 *<br>* figure 1 *<br>----- | 1 | **DOMAINES TECHNIQUES RECHERCHES (Int.Cl.5)**<br><br>H04B<br>H04M |

Le présent rapport a été établi pour toutes les revendications

| Lieu de la recherche | Date d'achèvement de la recherche | Examinateur |
|---|---|---|
| LA HAYE | 18 Novembre 1993 | LYDON, M |